# EUROPÄISCHE PATENTANMELDUNG

(11) **EP 0 682 079 A2**
(43) Veröffentlichungstag der Anmeldung: **15.11.1995**
(21) Anmeldenummer: 95106776.8
(22) Anmeldetag: 05.05.1995
(51) Int. Cl.: C08L 25/02, C08J 9/18

(54) **Expandierbare Styrolpolymerisate**

(30) Priorität: 13.05.1994 DE 4416852
(71) Anmelder: BASF Aktiengesellschaft, D-67063 Ludwigshafen (DE)
(72) Erfinder: Henn, Rolf, Dr., D-68775 Ketsch (DE); Hahn, Klaus, Dr., D-67281 Kirchheim (DE); Hönl, Hans, Dr., D-67271 Obersülzen (DE); Heckmann, Walter, Dr., D-69469 Weinheim (DE); Wassmer, Karl-Heinz, Dr., D-67117 Limburgerhof (DE); Klement, Erich, D-64668 Rimbach (DE); Fischer, Joachim, Dr., D-67229 Grosskarlbach (DE)

(57) **Zusammenfassung**

Gegenstand der Erfindung sind expandierbare Styrolpolymerisate für elastische Polystyrolschäume, enthaltend
a) 50 bis 75 Gew.-% Polystyrol und/oder eines Styrolcopoly-merisates mit mindestens 50 Gew.-% einpolymerisiertem Polystyrol,
b) 5 bis 30 Gew.-% eines styrollöslichen Elastomeren,
c) 5 bis 20 Gew.-% mindestens eines Block-Copolymerisats mit Styrol als einer Komponente, d) 15 bis 50 Gew.-% mindestens eines Polyolefins,
e) 1 bis 15 Gew.-%, bezogen auf die Summe aus a) und b),eines niedrigsiedenden Treibmittels, sowie gegebenenfalls
f) übliche Zusatzstoffe in wirksamen Mengen, sowie daraus hergestellte Schaumstoffe.

## Beschreibung

Die Erfindung betrifft expandierbare Styrolpolymerisate, die zur Herstellung von elastischen Schaumstoffen geeignet sind.

Schaumstoffe auf Basis von expandierbaren Polystyrolpartikeln haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Polystyrolschaumstoffe sind harte Schaumstoffe. Ihre geringe Elastizität ist für viele Anwendungen, beispielsweise auf dem Verpackungsgebiet, nachteilig, da der Schutz des verpackten Gutes gegen Schlag- und Stoßbeanspruchung nur unzureichend möglich ist und die als Verpackungsmittel verwendeten Schaumstofformteile bereits bei geringer Deformation brechen.

Es gab daher in der Vergangenheit bereits Versuche, die Elastizität von Polystyrolschaumstoffen zu erhöhen.

Ein Verfahren, Schaumstoffe aus Polystyrol zu elastifizieren, ist in EP-A-561 216 beschrieben. Hierbei werden Schaumstoffblöcke der Dichte 8 bis 12 kg/m³ in einer Richtung auf etwa 1/3 ihrer Abmessung komprimiert und danach wieder entspannt. Aus den so behandelten Blöcken geschnittene Platten besitzen eine erhöhte Elastizität und werden beispielsweise zur Trittschalldämmung verwendet.

Verfahrensbedingt ist jedoch eine Übertragung dieser Arbeitsweise auf Formteile kaum zu realisieren und wird daher nicht durchgeführt.

So ist bekannt, in Styrolpolymerisate kautschukelastische Polymere einzubringen und die so entstandenen Polymerisate nach Imprägnierung mit flüchtigen Treibmitteln zu verschäumen.

Durch die schlechte Mischbarkeit der Elastomere in Polystyrol kommt es jedoch häufig zu Unverträglichkeiten zwischen den Polymeren. Auch die mechanischen Eigenschaften der so hergestellten Schäume sind meist unzureichend.

In US-A-4,692,471 werden expandierbare Interpolymerpartikel beschrieben, die durch Polymerisation in Styrol gelöstem Polyolefinen, beispielsweise Polyethylen, Polypropylen und einem Copolymer aus Propylen und einem anderen Olefin mit einem Schmelzpunkt von unter 150 °C hergestellt werden. Nachteilig an diesen Polymeren ist jedoch, daß in einem gesonderten Verfahrensschritt Verträglichkeitsvermittler in das Polymere eingebaut werden müssen.

In DE-A-41 24 207 werden expandierbare Styrolpolymerisate zur Herstellung schnell entformbarer Schaumstoffkörper beschrieben, die Polystyrol als stationäre Phase enthalten, in der ein amorphes Poly-alpha-Olefin als nichtstationäre Phase gleichmäßig verteilt ist. Die Herstellung dieser Polymerisate erfolgt durch Lösung der Polyolefine in Styrol und nachfolgende Polymerisation. Der Vorteil dieser Polymerisate liegt in der kurzen Abkühlzeit, ihre Elastifizierung ist allerdings nur unzureichend. Allen beschriebenen Verfahren des Standes der Technik ist darüber hinaus gemeinsam, daß das Treibmittel sehr schnell aus den Perlen diffundiert. Bereits nach wenigen Tagen kann der Treibmittelverlust so groß sein, daß eine ordnungsgemäße Verschäumung der Perlen nicht mehr möglich ist.

In DE-A-38 14 783 werden Interpolymerisate aus Polystyrol und Ethylen-Vinylacetat-Copolymeren beschrieben. Derartige Produkte weisen eine gute Elastizität auf, allerdings entweicht auch hier das Treibmittel sehr schnell aus den Polymerisat-Partikeln.

Die Aufgabe unserer Erfindung war es, expandierbare Styrolpolymerisate bereitzustellen, die zur Herstellung elastischer Schaumstoffe geeignet sind, auch nach längerer Lagerung keine signifikanten Treibmittelverluste aufweisen sowie recycelfähig sind.

Erfindungsgemäß wird die Aufgabe gelöst durch expandierbare Styrolpolymerisate für elastische Polystyrolschäume, enthaltend
a) 50 bis 75 Gew.-% Polystyrol und/oder eines Styrolcopolymerisates mit mindestens 50 Gew.-% einpolymerisiertem Polystyrol
b) 5 bis 30 Gew.-% mindestens eines styrollöslichen Elastomeren
c) 5 bis 20 Gew.-%, bezogen auf die Summe aus a) und b), mindestens eines Block-Copolymerisats mit Styrol als einer Komponente,
d) 15 bis 50 Gew.-%, bezogen auf die Summe aus a) bis d) mindestens eines Polyolefins,
e) 1 bis 15 Gew.-%, bezogen auf die Summe aus bis d), eines niedrigsiedenden Treibmittels, sowie gegebenenfalls
f) übliche Zusatzstoffe in wirksamen Mengen, wobei in den unverschäumten Polystyrolperlen die Komponente b) in Form von Zellteilchen und die Komponente c) in Form von Teilchen der mittleren Größe 0,2 bis 2 µm in der Polystyrolphase vorliegen.

Gegenstand der Erfindung sind demzufolge expandierbare Styrolpolymerisate für elastische Polystyrolschäume, enthaltend
a) 50 bis 75 Gew.-% Polystyrol und/oder eines Styrolcopolymerisates mit mindestens 50 Gew.-% einpolymerisiertem Polystyrol
b) 5 bis 30 Gew.-% mindestens eines styrollöslichen Elastomeren,
c) 5 bis 20 Gew.-% mindestens eines Block-Copolymerisats mit Styrol als einer Komponente,
d) 15 bis 50 Gew.-% mindestens eines Polyolefins,
e) 1 bis 15 Gew.-%, bezogen auf die Summe aus a) bis d), eines niedrigsiedenden Treibmittels, sowie gegebenenfalls
f) übliche Zusatzstoffe in wirksamen Mengen, wobei in den unverschäumten Polystyrolperlen die Komponente b) in Form von Zellteilchen und die Komponente c) in Form von Teilchen der mittleren Größe 0,2 bis 2 µm in der Polystyrolphase vorliegen.

Gegenstand der Erfindung sind weiterhin elastische Schaumstoffeder Dichte 5 bis 70 g/l, enthaltend
a) 50 bis 75 Gew.-% Polystyrol und/oder eines Styrolcopolymerisates mit mindestens 50 Gew.-% einpolymerisiertem Polystyrol
b) 5 bis 30 Gew.-% mindestens eines styrollöslichen Elastomeren
c) 5 bis 20 Gew.-%, bezogen auf die Summe aus a) und b), mindestens eines Blockcopolymeren mit Styrol als einer Komponente,
d) 15 bis 50 Gew.-% eines Polyolefins sowie gegebenenfalls
e) übliche Zusatzstoffe in wirksamen Mengen.

Gegenstand der Erfindung sind weiterhin die Herstellung der Styrolpolymerisate sowie Formkörper, hergestellt aus den elastischen Schaumstoffen.

Die expandierbaren Styrolpolymerisate enthalten als Komponente a) 75 bis 98 Gew.-%, vorzugsweise 85 bis 93 Gew.-% Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Polystyrol eine geringe Menge eines Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 mol-%, bezogen auf Styrol, verwendet.

Zur Erzielung einer besonders hohen Expandierbarkeit ist es zweckmäßig, daß das Styrolpolymerisat ein mittleres Molekulargewicht M_{w} (Gewichtsmittel), gemessen nach der GPC-Methode, zwischen 100 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte (M_{Z+1}-M_{Z}) weniger als 150 000 beträgt. Die GPC-Methode ist beschrieben in G. Glöckler, Polymercharakterisierung, Chromatographische Methoden Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die obengenannten mittleren Molgewichte aufweisen, können durch Mitverwendung von Reglern bei der Polymerisation erhalten werden. Als Regler verwendet man zweckmäßig 0,01 bis 1,5 Gew.-%, vorzugsweise 0,01 bis 0,5 Gew.-%, einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.-%, vorteilhaft 0,5 bis 10 Gew.-%, eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.-%, vorzugsweise 0,15 bis 1,5 Gew.-%, einpolymerisiertes Acrylnitril enthalten, führen zu Schaumstoffen, die sich durch weitgehende Schrumpffreiheit auszeichnen. Auch ein Gemisch aus 95 bis 99,5 Gew.-% Polystyrol und 0,5 bis 5 Gew.-% eines styrollöslichen Styrol-Acrylnitril-Copolymeren zeigt diese Eigenschaften, wenn der Gesamtgehalt an Acrylnitril im Gemisch 0,1 bis 2 Gew.-%, vorzugsweise 0,15 bis 2 Gew.-% beträgt.

Styrolpolymerisate, die 3 bis 20 Gew.-%, vorzugsweise 5 bis 15 Gew.-% einpolymerisierbares Acrylnitril enthalten, führen zu Schaumstoffen mit hoher Ölbeständigkeit. Auch ein Gemisch aus 50 bis 85 Gew.-% Polystyrol und 15 bis 50 Gew.-% eines styrollöslichen Styrol-Acrylnitril-Copolymeren zeigt diese vorteilhafte Eigenschaft, wenn der Gesamtgehalt an Acrylnitril im Gemisch 3 bis 20 Gew.-%, vorzugsweise 5 bis 15 Gew.-%, beträgt. Die Herstellung derartiger Mischungen erfolgt auf einfache Weise dadurch, daß man vor der Polymerisation die vorgesehene Menge des Styrol-Acrylnitril-Copolymeren in Styrol löst.

Styrolpolymerisate, die 2 bis 15 Gew.-%, insbesondere 3 bis 12 Gew.-% Maleinsäure(anhydrid) als Comonomeres enthalten, führen zu Schaumstoffen, die sich durch hohe Wärmeformbeständigkeit auszeichnen.

Als Komponente b) kommen insbesondere styrollösliche Elastomere mit Glasübergangstemperaturen unter 20^{o}C, vorzugsweise unter -10°C, insbesondere unter -20°C, zum Einsatz.

Die Elastomeren sind im allgemeinen im wesentlichen unvernetzt gegebenenfalls nur soweit vernetzt, daß die Löslichkeit im Styrol nicht beeinträchtigt ist.

Vorzugsweise werden für die erfindungsgemäßen Styrolpolymerisate Polybutadien-Kautschuke eingesetzt, insbesondere solche mit Molekulargewichten von 200 000 bis 300 000 und einem Gehalt von < 50 % 1,4-cis Strukturen und einem Anteil von 1,2-Vinylstrukturen von 5 bis 20 % (medium-cis-Aufbau) oder einem Gehalt von >50 bis 99 % 1,4-cis Strukturen und einem Anteil von 1,2-Vinylstrukturen von < 5 % (high-cis-Aufbau).

Als Komponente c) werden übliche Blockcopolymerisate aus Styrol mit mindestens einem weiteren olefinisch ungesättigtem Monomeren eingesetzt, wobei der Styrolgehalt des Blockcopolymeren vorzugsweise mindestens 50 Gew.-% beträgt.

Als weitere olefinisch ungesättigte Monomere werden insbesondere solche mit einer oder zwei olefinischen Doppelbindungen eingesetzt, insbesondere Butadien, Isopren oder Mischungen daraus. Geeignet sind insbesondere Blockcopolymere mit einem Diblock- und Triblock-Aufbau. Dabei kann zwischen den Blöcken der Blockcopolymerisate ein scharfer Übergang bestehen, es ist jedoch auch möglich, einen sogenannten verschmierten Übergang zwischen den Blöcken einzubauen. Dabei gibt es in der Polymerkette zwischen den Blöcken Bereiche, in denen die Monomeren statistisch angeordnet sind.

Die Blockcopolymeren können linear, verzweigt oder dendritisch sein.

Weiterhin können auch Blockcopolymere eingesetzt werden, deren nach der Polymerisation verbliebene Doppelbindungen teilweise oder ganz hydriert wurden.

Weitere Angaben zu den verwendeten Blockcopolymerisaten und ihrer Herstellung finden sich beispielsweise in US-A-3,281,383. Als Komponente d) werden Polyolefine, vorzugsweise Polyethylen und/oder Polypropylen, eingesetzt. Geeignet sind auch Copolymerisate aus Ethylen und/oder Propylen mit anderen olefinisch ungesättigten Monomeren, beispielsweise Ethylen-Vinylacetat-Copolymere (EVA-Copolymeren).

Insbesondere geeignet ist Polyethylen, wobei mit linearem Polyethylen mit einer Dichte im Bereich von 0,940 bis 0,965 g/cm³ besonders günstige Ergebnisse erzielt werden können. Derartige Polyethylentypen werden auch als HDPE bezeichnet.

Bei den erfindungsgemäßen expandierbaren Styrolpolymerisaten liegen die Komponente b) in Form von Zellteilchen und die Komponenten c) und d) in Form von unregelmäßigen Teilchen in der Polystyrolmatrix vor. Dabei sollten die Zellteilchen Durchmesser von 0,1 bis 10 mµ, insbesondere 0,5 bis 5 µm, aufweisen. Zellteilchen mit größeren Durchmessern in den expandierbaren Styrolpolymerisaten führen zu Treibmittelverlusten sowie zu ungleichmäßigen Zellstrukturen in den resultierenden Schaumstoffen.

Ausführungen zur Morphologie von elastomermodifizierten Styrolpolymerisaten finden sich in: Echte, Rubber-Toughened Styrene Polymers, Advances in Chemistry Series No. 222, 1989. Weitere Angaben zu den verwendeten Blockcopolymeren und ihrer Herstellung finden sich beispielsweise in US-A-3,281,383.

Die expandierbaren Styrolpolymerisate enthalten in homogener Verteilung als Komponente c) 2 bis 15 Gew.-%, vorzugsweise 3 bis 10 Gew.-% eines niedrig siedenden Treibmittels. Die Treibmittel sollen das Polystyrol nicht lösen, aber in Polystyrol löslich sein. Der Siedepunkt soll unter dem Erweichungspunkt des Polystyrols liegen. Geeignete Treibmittel sind beispielsweise Propan, Butan, Pentan, Hexan, Cyclopentan, Cyclohexan, Octan, Dichlordifluormethan, Trifluorchlormethan und 1,1,1-Difluorchlorethan. Vorzugsweise wird Pentan verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Die Herstellung der erfindungsgemäßen Styrolpolymerisate kann beispielsweise durch Vermischen der Komponenten a), b), c), d) und gegebenenfalls auch e) in der Schmelze, zumeist in einem Extruder erfolgen, wobei bei Zugabe von e) der Strang nach dem Auspressen so rasch abgekühlt werden muß, daß kein Aufschäumen erfolgt. Anschließend wird das erhaltene Styrolpolymerisat zerkleinert, zumeist durch Granulierung.

Weiterhin ist es möglich, die Komponenten b) und/oder c) in Styrol zu lösen und diese Lösung zu polymerisieren, wobei die Polymerisation vorzugsweise in Masse durchgeführt wird, und die übrigen Komponenten durch Vermischen in der Schmelze zuzugeben.

Dabei werden die Komponenten b) und/oder c) in Styrol gelöst und diese Lösung nach an sich bekannten Verfahren, zumeist unter Zusatz von radikalischen Initiatoren oder durch Wärmezufuhr, polymerisiert.

Es ist hierbei auch möglich, Polymerisation in Masse bis zu einem Umsatz von ca. 30 % durchzuführen, das so erhaltene Polymerisat wie üblich zu suspendieren und die Polymerisation in Suspension zu Ende zu führen.

Derartige Polymerisationsverfahren werden beispielsweise in DE-B-26 13 352 beschrieben.

Besonders günstige Ergebnisse werden erzielt, wenn die Styrolpolymerisate durch Massepolymerisation einer Lösung der Komponente b) in Styrol und Mischung dieses Polymerisates mit den Komponenten c) und d) hergestellt werden. Die Polymerisation wird dabei wie oben beschrieben durchgeführt.

Die Vermischung des Polymerisats mit den Komponenten c) und d) kann insbesondere durch Extrusion in der Schmelze erfolgen.

Anschließend muß bei dieser Verfahrensweise das Styrolpolymerisat mit dem Treibmittel e) imprägniert werden. Das kann beispielsweise durch Zusatz des Treibmittels in das geschmolzene Polymerisat beim Einarbeiten der Komponenten c) und d) erfolgen, beispielsweise beim Extrudieren, wobei auch hier ein Aufschäumen verhindert werden muß.

Vorteilhafterweise erfolgt der Treibmittelzusatz jedoch nach dem Imprägnierverfahren. Dazu müssen die so erhaltenen Polymerisate zerkleinert werden. Dies erfolgt zweckmäßigerweise durch eine an die Extrusion angeschlossene Granulierung.

Die Granulate liegen hierbei zumeist in Form von Partikeln, in Abhängigkeit von der Granulierung zumeist in Perlform oder Granulatform vor. Ihr mittlerer Durchmesser beträgt vorzugsweise 0,1 bis 6 mm, insbesondere 0,4 bis 3 mm.

Zur Imprägnierung wird das Granulat in einer Flüssigkeit, zumeist Wasser, in Gegenwart der üblichen Hilfs- und Zusatzstoffe in einem Druckbehälter suspendiert, dieser inertisiert, und auf eine Temperatur gebracht, die oberhalb des Erweichungspunktes, jedoch unterhalb des Schmelzpunktes des Polymeren liegt. Bei dieser Temperatur wird das Treibmittel aufgepreßt. Nach dem Abkühlen und Entspannen wird das imprägnierte Granulat abgetrennt, gereinigt und getrocknet, wobei das Trocknen vorzugsweise bei Raumtemperatur erfolgt, beispielsweise in einem Luftstrom. Dieses Verfahren wird beispielsweise in EP-A-343 473 beschrieben.

Weitere Angaben zu den üblichen Herstellungsverfahren finden sich beispielsweise im Kunststoffhandbuch, Band 5, Polystyrol, herausgegeben von R. Vieweg und G. Daumiller, Carl-Hanser-Verlag München, 1969.

Für die Herstellung von Schaumstoffen werden die expandierbaren Styrolpolymerisate in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden. Abschließend können sie in bekannter Weise in nicht gasdicht schließenden Formen zu Formteilen verschweißt werden.

Die erhaltenen Schaumstoffe weisen Dichten von 5 bis 70 g/cm³, insbesondere 10 bis 35 g/cm³, auf. Sie zeichnen sich durch eine hohe Elastizität aus. So besitzen sie ein Rückstellvermögen, das bis zu 90 % bei viermaliger Stauchung gemessen nach DIN 53577, beträgt. Damit sind sie herkömmlichen Styrolpolymeren deutlich überlegen.

Die Treibmittelverluste der unverschäumten Perlen sind sehr gering. Auch nach einer Lagerung von mehreren Wochen war noch eine Verschäumung noch problemlos möglich.

Das ist um so überraschender, da bei Styrolpolymerisaten vergleichbarer Zusammensetzung, bei denen das Polyolefin durch Auflösung im Styrolmonomeren und Polymerisation dieser Lösung, sogenannte Interpolymerisation, in das Polymerisat eingearbeitet wurde, der Treibmittelverlust bereits nach sehr kurzer Zeit so stark war, daß es zu keiner Verschäumung mehr kam.

Die vorgeschäumten Perlen sind von einer gleichmäßigen Zellstruktur und verschweißen beim Formprozeß ohne Bildung von Lunkern. Die so hergestellten Formkörper weisen eine ausgezeichnete Wärmeformbeständigkeit auf. Die Schäume und Formkörper sind problemlos recycelbar.

Die Erfindung soll an nachfolgenden Beispielen näher erläutert werden:

### Beispiel 1

8 Gew.-Teile eines Polybutadiens mit einem Molekulargewicht (Mw) 250 000 von und einem Gehalt an 1,4-cis-Strukturen von
30,4 % wurden in 92 Gew.-Teilen Styrol gelöst und die Lösung nach allgemein bekanntem Verfahren radikalisch polymerisiert.

Das entstandene Polymerisat hatte eine Viskositätszahl von 70 cm /g, eine Erweichungstemperatur (Vicat) von 93 °C sowie einen Schmelzindex von 3,7 cm³/10 min bei 200 °C. Die Polybutadienphase war in Form von Zellteilchen mit Durchmessern von 0,5 bis 2,5 µm in der Polystyrolphase verteilt.

50 Gew.-Teile dieses Polymerisates wurden mit 40 Gew.-Teilen eines linearen Polyethylens mit der Dichte 0,92 g/cm³ und einem Schmelzindex von 1,0 cm³/10 min bei 190 °C und 2,16 kg (Dowlex 2045 E der Firma Dow) und 10 Gew.-Teilen eines linearen, anionisch polymerisierten Styrol-Butadien-Blockcopolymeren mit verschmiertem Übergang und einem Polybutadiengehalt von 26 Gew.-% in einem Zweischneckenextruder der Firma Werner & Pfleiderer, Stuttgart, bei 200 °C vermischt und zu Teilchen mit der Abmessung 2 x 2 x 2 mm granuliert. Das so erhaltene Polymerisat wies einen Schmelzindex von 4 cm³/10 min bei 200 °C und 5 kp, eine Erweichungstemperatur (Vicat) von 102 °C und eine Kerbschlagzähigkeit nach DIN 53 453 von 18 kJ/m² auf. 6000 g dieses Blends wurden zusammen mit 21 000 g vollentsalztem Wasser, 76 g Natriumpyrophosphat, 155 g Magnesiumsulfat - Heptahydrat und 50 g einer 40 Gew.-%-igen Lösung eines Alkylbenzolsulfonates (Mersolat K 30, Bayer AG) in einen 50 l fassenden Rührkessel gegeben. Dieser wurde verschlossen, 2 mal durch Aufpressen von 1 atm Stickstoff inertisiert und unter Rühren bei 250 Upm auf 130 °C aufgeheizt. Nach Erreichen von 130 °C wurden während einer Dauer von 15 Minuten 600 g eines Gemisches aus 80 Gew.-% n-Pentan und 20 Gew.-% iso-Pentan und 120 g n-Heptan in den Kessel gedrückt und und weitere 10 Stunden bei 130 °C gerührt. Nach dem Abkühlen und Entspannen wurde der Kesselinhalt abgelassen und die Perlen aufgefangen. Diese wurden 2 mal mit vollentsalztem Wasser gewaschen und durch Hindurchsaugen von Umgebungsluft mit einer Temperatur von 23 °C auf einer Vakuumnutsche getrocknet. Die Perlen hatten einen Treibmittelanteil von 6,5 Gew.-% und einen Innenwassergehalt von 1,3 Gew.-%. Nach eintägiger offener Lagerung wurde durch diskontinuierliches Vorschäumen während 7 Minuten mittels Wasserdampf eine Schüttdichte von 26,7 g/l erreicht. Nach dreitägigem offenen Auslegen wurde bei gleichen Vorschäumbedingungen eine Schüttdichte von 29,2 g/l erreicht. Der Schaum war in beiden Fällen von gleichmäßiger mittelfeiner Struktur.

Aus vorgeschäumten Perlen wurden Formkörper der Dichte 30 g/l hergestellt. Daraus geschnittene Prüfkörper wiesen nach 4-maliger Stauchung um 70 % eine Rückstellung auf 87 % der ursprünglichen Höhe auf (bestimmt nach DIN 53 577).

### Beispiel 2

65 Gew.-Teile des Polybutadien-Polystyrol-Interpolymerisats aus Beispiel 1, 25 Gew.-Teile des linearen Polyethylens aus Beispiel 1 und 10 Gew.-Teile eines linearen, anionisch polymerisierten Styrol-Butadien-Styrol-Blockcopolymerisats mit verschmiertem Übergang, einer unsymmetrischen Blockverteilung und einem Polybutadiengehalt von 26 Gew.-% wurden wie in Beispiel 1 beschrieben in einem Extruder verblendet und zu Teilchen mit der Abmessung 2 x 2 x 2 mm granuliert.

Das so erhaltene Polymerisat wies einen Schmelzindex von 4 cm³/10 min bei 200 °C und 5 kp, eine Erweichungstemperatur (Vicat A 50) von 102 °C und eine Kerbschlagzähigkeit nach DIN 53 453 von 18 kJ/m² auf.

4 650 g dieses Granulats wurden wie in Beispiel 1 beschrieben bei 125 °C mit 465 g eines Gemisches aus 80 Gew.-% n-Pentan und 20 Gew.-% iso-Pentan imprägniert und nachbehandelt. Die Perlen hatten einen Treibmittelanteil von 6,4 Gew.-% und einen Innenwassergehalt von 1,7 Gew.-%. Nach eintägiger offener Lagerung wurde durch diskontinuierliches Vorschäumen während 5 Minuten mittels Wasserdampf eine minimale Schüttdichte von 33,7 g/l erreicht. Nach dreitägiger offener Lagerung wurde bei gleichen Vorschäumbedingungen eine minimale Schüttdichte von 34,8 g/l erreicht. Der Schaum war in beiden Fällen von gleichmäßiger mittelfeiner Struktur.

Aus vorgeschäumten Perlen wurden Formkörper der Dichte 33 g/l hergestellt. Daraus geschnittene Prüfkörper wiesen nach 4-maliger Stauchung um 70 % eine Rückstellung auf 83 % der ursprünglichen Höhe auf (bestimmt nach DIN 53 577).

### Vergleichsbeispiel 1

In einem 47,5-l-Druckkessel werden unter Rühren 28,477 kg VE-Wasser, 0,426 kg Tricalciumphosphat, 0,0038 kg Kaliumdihydrogenphosphat, 0,0131 kg Di-Natriumhydrogenphoshat-12-Hydrat sowie 0,003 kg Natriumsalz der C_{14,15}-Alkylsulfonsäure und schließlich 6,17 kg Polyethylen-Vinylacetat-Copolymergranulat (2,25 x 1,0 mm; VA-Gehalt 4 %; MFI (190/2.16) = 1 g/10 min.; Dichte 0,925 g/ml), welches 0,5 Gew.% Wollastonit (max. Korngröße 16 µm, Schüttdichte 0,28 g/cm³; Spez. Oberfläche BET 3 m²/g; Fa. Quarzwerke GmbH, 50226 Frechen) enthält, eingefüllt. Zu dieser Suspension werden 6,17 kg Styrol, 0,0247 kg Dresinate 214 (Kaliumsalz von disproportionierter Abietinsäure, Fa. Abieta Chemie, 86368 Gersthofen), 0,0617 kg Polyethylenwachs (Mₙ = 750; Dichte 0,92 g/ml; Tropfpkt. 105 - 110°C). 0,0617 kg Di-2-ethylhexylphthalat sowie 0,0679 Dicumylperoid, 0,0123 kg tert. Butylperbenzoat und 0,0308 kg Dibenzoylperoid gegeben. Der Kessel wird mit Stickstoff gespült und auf 75°C aufgeheizt, nach 5 h auf 125°C gesteigert und dort 5 h belassen. Zur Imprägnierung mit dem Treibmittel wird die Temperatur auf 75°C zurückgenommen und im Verlauf von ca. 3 h werden 1,543 kg iso-Pentan zudosiert. Der Kessel wird auf Raumtemperatur gebracht und es werden 0,7 kg Salpetersäure (65%ig) zugegeben. Anschließend wird der Kesselinhalt in einem Waschtank entleert und die Rohperlen werden gewaschen. Die abgesiebten Perlen werden rasch mit 50°C warmer Luft getrocknet.

Die Perlen enthielten unmittelbar anch der Aufarbeitung 4,1 Gew.-% Pentan und 0,75 Gew.-% Wasser, jeweils bezogen auf das Gesamtgewicht der Perlen.

Bei einer unmittelbar auf die Aufarbeitung folgenden Verschäumung wie in Beispiel 1 beschrieben eine minimale Schüttdichte von 25 g/l erreicht.

Aus den vorgeschäumten Perlen wurden Formkörper der Dichte 26 g/l hergestellt. Daraus geschnittene Prüfkörper wiesen nach 4-maliger Stauchung um 70 % eine Rückstellung von 85 % der ursprünglichen Höhe auf (bestimtt nach DIN 53 577).

Nach eintägiger offener Lagerung wurde lediglich eine minimale Schüttdichte von 31,6 g/l erreicht, nach dreitägiger offener Lagerung schäumten die Perlen praktisch nicht mehr (486 g/l nach 10 Minuten vorschäumen).

## Patentansprüche

1. Expandierbare Styrolpolymerisate für elastische Polystyrolschäume, enthaltend
a) 50 bis 75 Gew.-% Polystyrol und/oder eines Styrolcopolymerisates mit mindestens 50 Gew.-% einpolymerisiertem Polystyrol,
b) 5 bis 30 Gew.-% mindestens eines styrollöslichen Elastomeren,
c) 5 bis 20 Gew.-% mindestens eines Block-Copolymerisats mit Styrol als einer Komponente,
d) 15 bis 50 Gew.-% mindestens eines Polyolefins,
e) 1 bis 15 Gew.-%, bezogen auf die Summe aus a) und b),eines niedrigsiedenden Treibmittels, sowie gegebenenfalls
f) übliche Zusatzstoffe in wirksamen Mengen.

2. Expandierbare Styrolpolymerisate nach Anspruch 1, dadurch gekennzeichnet, daß als Komponente b) styrollösliche Elastomere mit Glasübergangstemperaturen unter 20°C verwendet werden.

3. Expandierbare Styrolpolymerisate nach Anspruch 1, dadurch gekennzeichnet, daß als Komponente b) Polybutadien verwendet wird.

4. Expandierbare Styrolpolymerisate nach Anspruch 1, dadurch gekennzeichnet, daß als Komponente c) Styrol-Butadien-Block-Copolymere verwendet werden.

5. Expandierbare Styrolpolymerisate nach Anspruch 1, dadurch gekennzeichnet, daß die Komponente c) einen Styrolgehalt von mindestens 20 Gew.-%, bezogen auf c), aufweist.

6. Expandierbare Styrolpolymerisate nach Anspruch 1, dadurch gekennzeichnet, daß als Komponente c) Styrol-Butadien-Diblock-Copolymere verwendet werden.

7. Expandierbare Styrolpolymerisate nach Anspruch 1, dadurch gekennzeichnet, daß als Komponente c) Styrol-Butadien-Styrol-Triblock-Copolymere verwendet werden.

8. Expandierbare Styrolpolymerisate nach Anspruch 1, dadurch gekennzeichnet, daß als Komponente c) Gemische aus Styrol-Butadien-Diblock-Copolymeren und Styrol-Butadien-Styrol-Triblock-Copolymeren verwendet werden.

9. Expandierbare Styrolpolymerisate nach Anspruch 1, dadurch gekennzeichnet, daß die Komponente d) Polyethylen ist.

10. Expandierbare Styrolpolymerisate nach Anspruch 1, dadurch gekennzeichnet, daß die Komponente d) ein Gemisch aus Polyethylen und Polypropylen ist.

11. Verfahren zur Herstellung von expandierbaren Styrolpolymerisaten nach Anspruch 1, dadurch gekennzeichnet, daß man die Komponente b) in der Komponente a) auflöst, die entstandene Lösung nach an sich bekanntem Verfahren polymerisiert, das Polymerisat auf übliche Weise aufarbeitet, mit den Komponenten c) und d) in der Schmelze vermischt, granuliert und während oder nach dem Granulieren auf an sich bekannte Weise mit Treibmittel imprägniert.

12. Elastische Schaumstoffe der Dichte 5 bis 70 g/l, enthaltend
a) 50 bis 75 Gew.-% Polystyrol und/oder eines Styrolcopolymerisates mit mindestens 50 Gew.-% einpolymerisiertem Polystyrol
b) 5 bis 30 Gew.-% mindestens eines styrollöslichen Elastomeren
c) 5 bis 20 Gew.-% mindestens eines Block-Copolymerisats mit Styrol als einer Komponente,
d) 15 bis 50 Gew.-% mindestens eines Polyolefins,
e) übliche Zusatzstoffe in wirksamen Mengen.

13. Verfahren zur Herstellung von elastischen Schaumstofformkörpern, dadurch gekennzeichnet, daß man expandierbare Styrolpolymerisate nach Anspruch 1 durch Erhitzen bei einer Temperatur oberhalb des Erweichungspunktes expandiert und die so erhaltenen Schaumstoffpartikel in nicht gasdicht abschließenden Formen durch Erhitzen miteinander verschweißt.
